Europäisches Patentamt

European Patent Office

Office européen des brevets

(19)

(11) Numéro de publication : **0 034 097**
**B1**

(12) **FASCICULE DE BREVET EUROPÉEN**

(45) Date de publication du fascicule du brevet :
17.10.84

(21) Numéro de dépôt : 81400178.0

(22) Date de dépôt : 04.02.81

(51) Int. Cl.³ : **C 04 B 35/10**, C 04 B 35/64

(54) Procédé de fabrication de pièces, notamment de tubes, en alumine translucide.

(30) Priorité : 08.02.80 FR 8002787

(43) Date de publication de la demande :
19.08.81 Bulletin 81/33

(45) Mention de la délivrance du brevet :
17.10.84 Bulletin 84/42

(84) Etats contractants désignés :
AT BE CH DE GB IT LI LU NL SE

(56) Documents cités :
FR-A- 2 277 790
FR-A- 2 288 958
FR-A- 2 317 067
FR-A- 2 425 414
US-E-     27 083
TRANSACTIONS AND JOURNAL OF THE BRITISH
CERAMIC SOCIETY, vol. 78, no. 1, 1979 Stoke-on-
Trent, GB M. HARMER et al: "Rapid Sintering of Pure
and Doped alpha-A12O3", pages 22-25
CHEMICAL ABSTRACTS, vol. 89, no. 24, 11 décembre
1978, page 323, colonne 1, abrégé 202.831v Columbus, Ohio, US K. COTTELL et al.: "Rapid firing of
alumina ceramics"

(73) Titulaire : **Société Européenne des Céramiques Alumineuses "EUROCERAL"**
**Zone Industrielle de Vendargues C.D. 112**
**F-34740 Vendargues (FR)**

(72) Inventeur : **Clément, René**
**Rue des Combes**
**F-34160 Castries (FR)**
Inventeur : **Gugliermotte, Francis**
**Mas de Tullière Saint-Jean de Cornies**
**F-34160 Castries (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

## Description

La présente invention se rapporte à des pièces et notamment à des tubes en alumine translucide et, plus particulièrement, à de tels tubes utilisés dans des lampes à vapeur métalliques à haute pression.

Les lampes à vapeur métallique à haute pression, telles que les lampes à décharge dans une vapeur de sodium, se développent considérablement en raison de leur rendement lumineux très élevé et de leur durée de vie importante.

L'enveloppe de telles lampes doit être optiquement transparente, résister à haute température, à l'action corrosive des vapeurs métalliques à pression élevée et être mécaniquement très résistante pour supporter les contraintes de fonctionnement et celles apportées par l'application de scellements métalliques pour la fixation des électrodes. Pour ces raisons, cette enveloppe est habituellement réalisée en alumine pure de haute densité.

A cet effet, on cherche à réaliser un matériau dont les cristaux aient une taille aussi régulière que possible et à éliminer toutes les impuretés et tous les pores entre et dans les cristaux afin que la transmission de la lumière soit maximale.

Comme la résistance mécanique est d'autant plus élevée que la taille des cristaux d'alumine est plus petite et, qu'inversement, la transparence optique croît avec la taille des cristaux, il faut donc rechercher les conditions optimales qui permettent d'obtenir des cristaux suffisamment gros pour présenter une bonne transmission de la lumière et assez petits pour que la résistance mécanique soit élevée.

Les paramètres principaux qui permettent d'atteindre cet objectif sont les suivants :

La nature chimique et physique de la poudre d'alumine qui doit être très pure et de granulométrie aussi centrée que possible,

le procédé de mise en forme qui doit conduire à une densité en cru aussi élevée que possible, et surtout,

les conditions de frittage qui doivent permettre la densification du matériau, c'est-à-dire le grossissement régulier et limité des cristaux et l'élimination complète des pores.

Le matériau obtenu doit être optiquement transparent, c'est-à-dire que la valeur de la transmission totale de la lumière, contrôlée par la méthode de la sphère intégrante telle que décrite, par exemple, dans l'article de A. H. Taylor « Theory Construction and Use of Photometric Integrating Sphere » (Sce Paper N° 447, Bull Byr Stand, Sept 26, 1921) doit être au minimum de 90 % pour un tube de 0,7 mm d'épaisseur.

Il est important de noter que cette alumine translucide est un matériau très différent de l'« alumine frittée » ordinaire dont la densité n'est que voisine de la densité théorique de l'alumine, et qui est opaque, alors que l'alumine translucide est pure et a cette densité théorique.

L'alumine frittée ordinaire est en effet une céramique dont la réalisation, connue depuis des décennies, peut être obtenue avec des alumines plus ou moins pures et de granulométries étalées, avec de nombreux additifs et des traitements thermiques variés, y compris un frittage rapide avec un cycle thermique extrêmement court.

Mais ce matériau n'est pas translucide parce qu'il renferme des impuretés et des pores dans et entre les cristaux ; de plus, sa résistance mécanique est relativement faible car les cristaux ont des tailles très dispersées et il ne peut pas supporter une atmosphère corrosive à haute température à cause des impuretés présentes.

Il existe, pour tout homme de l'art, une différence technique considérable entre ces alumines denses opaques et l'alumine translucide qui est constituée, comme on l'a dit plus haut, de cristaux de tailles régulières, exempte d'impuretés sauf l'addition d'une faible proportion d'un oxyde choisi pour éviter le grossissement des grains et dont les pores, aussi bien entre que dans les grains, ont été éliminés par un traitement thermique très particulier.

On a déjà réalisé des corps en alumine frittée dotés d'une certaine transparence. Le brevet US-E-27083 fait état de tels corps ayant une transparence supérieure à 60 % pour une épaisseur de 0,5 mm. Toutefois, ceci ne signifie pas nécessairement qu'il atteint au moins les 90 % que le procédé, objet de l'invention permet d'obtenir. En particulier d'ailleurs, le but recherché par cette technique n'est pas toujours d'obtenir une transparence élevée, mais parfois simplement une composition mécanique résistante pour faire par exemple des outils de coupe. Par ailleurs, l'oxyde de magnésium ajouté dans la préparation (1 000 à 4 000 ppm, revendication 12) est beaucoup trop forte pour obtenir une transparence supérieure à 60 %, ce que confirment les fourchettes revendiquées pour ce même oxyde dans la présente demande et qui sont de 100 à 1 000 ppm.

Le document « Transactions and journal of the British Ceramic Society », vol. 78, n° 1, 1979, décrit également la préparation d'alumine frittée par cuisson courte par translation des pièces dans un four à température élevée (1 950 °C). C'est essentiellement une étude scientifique sur les conditions d'élimination des pores dans de l'alumine $\alpha$ obtenue par un seul frittage rapide sans double cuisson. Cette alumine $\alpha$ de haute densité que l'on cherche à obtenir n'est absolument pas transparente et le fait que l'auteur envisage par exemple comme produit de dopage l'oxyde de titane $TiO_2$, au lieu de l'oxyde de magnésium MgO montre bien que la transparence n'est pas le but recherché car c'est un fait bien connu de l'homme de l'art que l'oxyde de titane augmente la taille des grains du produit fritté et s'oppose par là-même à sa transparence.

Dans ces conditions, on peut dire que les deux types d'alumine fritté recherchés d'une part dans le brevet US-E-27083 et d'autre part dans le document précédent, sont de nature et de propriétés totalement différentes.

Le brevet français FR-A-2 425 414 décrit un procédé de préparation d'alumine translucide, qui comporte la possibilité d'ajouter de l'oxyde MgO aux poudres composites d'alumine soumises au traitement de cuisson dans des proportions de 0,01 % à 0,2 % en poids, comme dans la présente demande. Ce brevet décrit toutefois une méthode de cuisson à poste fixe dans un four pendant une durée de 4 à 5 h (voir tableau p. 7) ou de 1 à 15 h (cf. p. 3, lignes 21-22) pour la cuisson secondaire, ce qui correspond tout à fait aux descriptions de l'art antérieur rappelé ci-dessous et ne correspond pas à une technique d'utilisation industrielle facile.

La « faisabilité » de l'alumine translucide n'a été découverte qu'en 1962, date du dépôt du brevet U.S. de Coble n° 3, 026, 210.

Depuis cette date, des perfectionnements ont été apportés à la réalisation de ce matériau portant principalement sur l'augmentation de la transparence optique par modification des additifs, mais aucun progrès décisif n'avait été fait dans le traitement thermique. Celui-ci devait être effectué sous vide ou sous hydrogène et, théoriquement, avoir une durée très prolongée qui était jugée nécessaire pour assurer une cristallisation homogène de l'alumine et surtout pour éliminer tous les pores situés aux joints de grains et dont les vitesses de déplacement étaient, suivant les calculs théoriques, extrêmement lentes.

Ces durées de frittage prolongées apparaissent dans diverses publications parmi lesquelles on peut citer :

— l'article de G.C. Kuczynski « Sintering and related phenomena » in « Materials Science Research N° 6 (1973), p. 217 ;

— le brevet U.S.P. N° 3, 026, 210 déjà cité qui, dans ses exemples de réalisation, indique une température de 1900 °C maintenue pendant 1 000 minutes ;

— le brevet plus récent U.S.P. N° 3, 792, 142 qui donne, dans tous ses exemples, des durées de 5 heures ;

— l'article de J.C.J. Pee Len « transparent hot pressed alumina » Céramurgia International — Vol. 5, N° 3 (1979), pp. 70-73 qui préconise des durées de frittage de 10 heures et de 24 heures à 1 800 et 1 850 °C.

Ces techniques de frittage prolongé doivent s'effectuer obligatoirement en fours fixes.

Ces traitements thermiques, effectués en fours fixes et de longue durée, ont de multiples inconvénients techniques, économiques et industriels.

Techniquement, ces fours fixes, qui doivent être de relativement grandes dimensions pour permettre la cuisson d'un nombre de tubes suffisant, sont équipés de nombreuses résistances chauffantes pour assurer une température aussi homogène que possible et, malgré des systèmes de chauffage et de régulation coûteux et sensibles, la température n'est pas rigoureusement la même en tous les points du four et les caractéristiques des tubes sont plus ou moins dispersées.

La reproductibilité des caractéristiques dans une même fournée et d'un four à l'autre est, en effet, la grande difficulté à résoudre dans le cas de ces traitements thermiques en four fixe et de longue durée. De plus, la magnésie s'évapore considérablement lors de cuisson prolongée à haute température sous hydrogène ou sous vide et la quantité restante devient insuffisante pour empêcher le développement exagéré des cristaux dont la taille devient trop importante et les tubes perdent alors totalement leur solidité mécanique. Il est alors nécessaire d'ajouter beaucoup de magnésie au départ en n'étant pas assuré du taux qui restera après le traitement thermique.

De plus, les impuretés que renferment les matières premières s'évaporent, se condensent dans les parties les plus froides du four fixe et viennent perturber les frittages ultérieurs de tubes.

Enfin, les tubes doivent être séparés par des pièces intercalaires en molybdène ou en alumine, afin d'éviter un collage entre eux lors d'un traitement thermique de longue durée. Pour toutes ces raisons, ce mode de cuisson discontinu est extrêmement onéreux, d'autant plus qu'une production industrielle nécessite un grand nombre de fours intermittents et une main d'œuvre relativement importante pour en assurer le chargement et le déchargement.

La présente invention a précisément pour objet un procédé qui permet la réalisation de tubes en alumine polycristalline translucide présentant une excellente transparence optique et une résistance mécanique très élevée, en particulier une très haute résistance aux chocs thermiques, à l'aide d'un traitement thermique final effectué selon un cycle beaucoup plus rapide que ceux des procédés antérieurement connus.

Ce procédé de fabrication de pièces en alumine frittée présentant une transparence optique élevée d'au moins 90 % pour une épaisseur de 0,7 mm et une grande résistance mécanique, du genre de ceux qui consistent à réaliser les pièces à partir d'une poudre d'alumine de grande pureté additionnée d'un liant organique et d'un faible pourcentage d'oxyde, notamment de magnésium et/ou de terre rare, à les mettre en forme puis à les soumettre à deux traitements thermiques successifs, à savoir un premier traitement en atmosphère oxydante pour éliminer le liant et consolider les particules, et un second traitement à température supérieure et en atmosphère riche en hydrogène pour obtenir le frittage, se caractérise en ce que ledit second traitement thermique a lieu par défilement desdites pièces en translation continue à travers un four maintenu à une température comprise entre 1 820 °C et 1 970 °C à une vitesse de translation constante comprise entre 3 et 50 millimètres par minute, le temps total nécessaire pour la cuisson d'une pièce depuis l'état consolidé ou « dégourdi » jusqu'à son retour à la température ambiante étant de 30 minutes à 5 heures au maximum.

L'originalité du procédé objet de l'invention réside par conséquent dans les modalités de déroulement du second traitement thermique, car lors de ses travaux, la Demanderesse a, en effet, constaté que, de façon inattendue et contrairement à ce qu'indiquent un grand nombre de publications antérieures, un cycle thermique de longue durée comprenant une montée en température très lente, un palier de plusieurs heures à la température optimale, puis un retour à la température ambiante, également très lent, n'est absolument pas indispensable pour conférer aux tubes en alumine pure les qualités physiques requises. Les recherches menées sur ce sujet ont montré au contraire qu'un cycle thermique très rapide conduit d'une manière rigoureuse, pouvait permettre la réalisation de tubes présentant une transparence optique et une résistance mécanique encore plus élevées que dans le cas d'une cuisson de longue durée et ce, dans des conditions techniques, industrielles et économiques extrêmement favorables.

Selon une caractéristique intéressante du procédé, le déplacement des pièces, notamment des tubes, dans le four de frittage peut intervenir de deux façons différentes.

Dans un premier mode de mise en œuvre, les pièces en forme de tubes sont déplacées régulièrement dans le sens longitudinal par rapport au gradient thermique de manière à ne porter à chaque instant qu'un court tronçon de matériau à la température de cuisson, d'une extrémité à l'autre de la pièce.

Dans un deuxième mode de mise en œuvre, les pièces également en forme de tubes sont déplacées régulièrement dans le sens transversal par rapport au gradient thermique, chaque pièce étant en totalité portée à une température croissante puis décroissante.

Selon l'invention, le four est soumis, durant le défilement des pièces, à une circulation d'hydrogène pur ou d'hydrogène additionné de faibles quantités d'oxygène et/ou d'oxyde de carbone, et/ou d'azote, et/ou de vapeur d'eau.

L'efficacité du procédé objet de l'invention permet de mieux doser les quantités nécessaires d'oxyde de magnésium et/ou de terres rares additionnées à la poudre d'alumine pure avant traitement ; une quantité de l'ordre de 0,05 % est généralement très suffisante.

Le premier traitement thermique, ou traitement préliminaire d'élimination du liant organique peut intervenir, comme dans l'Art connu, dans une atmosphère oxydante, le plus souvent à l'air, à une température supérieure à 700 °C.

Ce procédé de frittage rapide qui met en œuvre des fours ou cellules de cuisson dans lesquels les tubes se déplacent par rapport à une zone chaude fixe, soit dans le sens longitudinal, le traitement thermique étant réalisé de façon progressive d'une extrémité à l'autre des tubes, soit dans le sens transversal, toute la longueur du tube étant soumise à la même température qui augmente régulièrement, permet la réalisation de tubes constitués de cristaux d'alumine de relativement petite taille, ce qui leur confère une excellente résistance aux chocs thermiques mais également une très grande transparence optique.

Les caractéristiques physiques sont reproduites industriellement avec une grande précision car les tubes sont rigoureusement soumis au même traitement thermique. Cette précision se retrouve également sur la géométrie et les cotes peuvent être définies avec une très faible tolérance. Cette reproductibilité des caractéristiques est également due au fait qu'au cours de ces traitements thermiques à cycle très court, l'oxyde ajouté pour éviter le développement exagéré de la taille des cristaux, en particulier la magnésie, ne s'évapore pratiquement plus et qu'il est alors possible d'en introduire des quantités très limitées, ce qui est favorable à la transparence optique.

De plus, les impuretés s'évaporent dans la zone la plus chaude et se condensent dans les parties froides de la cellule ou même en dehors de celle-ci et n'ont aucune action sur la structure des tubes et ne provoquent pas d'hétérogénéités chimiques locales qui pourraient perturber les qualités optiques.

La vitesse de progression des pièces ou tubes dans les fours conduit à un temps de frittage total (depuis l'introduction d'une pièce froide à l'entrée du tube jusqu'à la récupération de la même pièce frittée et revenue à la température ambiante) qui est de 30 minutes à 5 heures au maximum. Ceci représente un progrès considérable par rapport aux techniques connues, si l'on tient compte en plus du fait que le procédé fonctionne en continu.

Selon un dernier objet de l'invention, les fours ou cellules de frittage sont constitués, soit d'une enceinte tubulaire chauffée très localement au moyen d'une résistance électrique et dans laquelle les tubes avancent longitudinalement à une vitesse régulière, avec, éventuellement, un mouvement de rotation sur eux-mêmes, soit d'une enceinte parallélépipédique à la longueur des tubes et de hauteur supérieure à leur diamètre, chauffée localement au moyen d'une résistance électrique, et dans laquelle les tubes progressent transversalement, leur déplacement étant assuré par gravité si l'enceinte est inclinée ou par un système mécanique de poussoir si cette enceinte est horizontale.

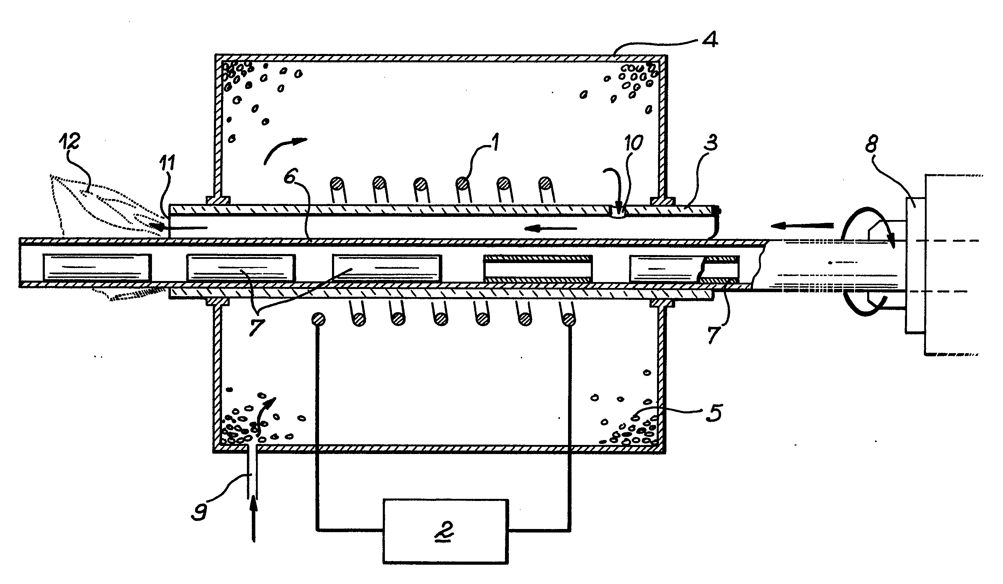

De toute façon, les caractéristiques et avantages de la présente invention apparaîtront mieux après la description qui suit d'un exemple de réalisation donné à titre explicatif et aucunement limitatif, en référence au dessin annexé qui représente une coupe longitudinale d'une cellule destinée à réaliser le traitement thermique à cycle rapide pour la fabrication de tubes en alumine translucide suivant le procédé de l'invention.

Exemple

On a réalisé une fabrication dans les conditions suivantes :

100 kg d'une poudre d'alumine à forte proportion d'alumine α, ayant une surface spécifique d'environ 15 m²/g, sont mélangés avec 0,05 % d'oxyde de magnésium (ou proportion équivalente d'aluminate de magnésium ou spinelle) puis avec 0,3 kg d'éthyl-méthyl-cellulose en poudre et 4 kg d'eau pour former le liant organique. La quantité d'oxyde ajouté peut varier, selon l'invention, de 0,01 % à 0,1 % en poids.

Ce mélange est longuement brassé jusqu'à obtention d'une pâte de consistance homogène dans un malaxeur, par exemple de type Simpson, avec meules qui écrasent le produit. La pâte ainsi obtenue est forcée à l'aide d'une presse à piston à travers une buse possédant des trous de 2 mm de diamètre. Cette opération est répétée trois fois pour parfaire l'homogénéité du mélange.

Le vermicelle obtenu est ensuite mis sous forme de tubes en forçant la pâte, sous pression, dans un espace annulaire ménagé entre une buse et un poinçon.

Les tubes obtenus sont séchés lentement à l'air, puis dans une étuve à 80 °C. Ensuite, les tubes sont tronçonnés à la longueur définitive (compte tenu du retrait qu'ils prendront au cours des différents traitements thermiques) et sont soumis à un premier traitement thermique, dans l'air, à 1 100° pendant une heure, cette première cuisson ayant pour but d'éliminer les liants organiques et de consolider le matériau pulvérulent.

Le traitement final, ou second traitement thermique, objet de l'invention, peut s'effectuer dans une cellule de frittage telle que schématisée sur la figure unique. Une résistance électrique en molybdène 1, alimentée par un circuit régulé 2 entoure un tube réfractaire en alumine pure 3, qui est logé dans un caisson métallique 4, rempli d'isolant réfractaire (brique, fibres ou billes), schématisé en 5.

Un tube 6 également en alumine pure, qui renferme les pièces à traiter thermiquement 7 repose par sa génératrice inférieure sur la paroi interne du tube 3 et est poussé lentement, à la vitesse de un centimètre par minute tout en tournant sur lui-même à 1/3 de tour par minute, par le système poussoir 8.

La résistance électrique 1 est réglée de telle façon que la température maximale à l'intérieur du tube 3 soit de 1 930 °C.

Les tubes à cuire 7 défilent ainsi régulièrement à l'intérieur du four et sont soumis à cette température d'une extrémité à l'autre.

Pendant toute la durée du traitement, un gaz riche en hydrogène est envoyé dans le caisson 4 pour protéger la résistance 1 de l'oxydation. Il pénètre par le conduit 9 dans ledit caisson 4 puis, de là dans l'intérieur du tube 3 par l'orifice 10 prévu à cet effet dans la paroi du tube 3.

Le tube mobile 6 étant très poreux à cette température, le gaz riche en hydrogène traverse aisément la paroi du tube 6 et baigne ainsi les pièces à traiter 7.

Le gaz s'échappe enfin à l'extrémité 11 du tube 3 où il brûle dans l'air en formant une flamme 12.

La longueur totale de la cellule de frittage étant de 85 cm, le cycle complet de cuisson d'un tube est de 1 heure 1/2.

Les tubes ainsi fabriqués sont contrôlés par la méthode de la sphère intégrante telle que décrite, par exemple, dans l'article de E.B. Rosa et A.H. Taylor « Theory Construction and use of the photometric integrating sphere », Sci. paper n° 447, Bull. Bur. Stand, Sept. 26, 1921.

Dans les tubes fabriqués au cours de l'exemple précédent, les valeurs de transmission totale relevées sont de 96 %.

La cellule de frittage décrite représente un exemple particulièrement simple, économique en frais de construction et d'exploitation, de faible encombrement, d'un four de traitement thermique de tubes en alumine translucide, réalisés suivant le procédé de l'invention ; il est bien évident toutefois que d'autres types de fours ou cellules de frittage à cycle rapide sont utilisables sans sortir du cadre de celle-ci.

**Revendications**

1. Procédé de fabrication de pièces en alumine frittée présentant une transparence optique d'au moins 90 % pour une épaisseur de 0,7 mm et une grande résistance mécanique, du genre de ceux qui consistent à réaliser les pièces à partir d'une poudre d'alumine à grande pureté additionnée d'un liant organique et d'un faible pourcentage d'oxyde, notamment de magnésium et/ou de terre rare, à les mettre en forme puis à les soumettre à deux traitements thermiques successifs, à savoir un premier traitement en atmosphère oxydante pour éliminer le liant et consolider les particules et un second traitement à température supérieure et en atmosphère riche en hydrogène pour obtenir le frittage, caractérisé en ce que ledit second traitement thermique a lieu par défilement desdites pièces en translation continue à travers un four maintenu à une température comprise entre 1 820 °C et 1 970 °C à une vitesse de translation constante comprise entre 3 et 50 mm par minute, le temps total nécessaire pour la cuisson d'une pièce depuis l'état consolidé ou « dégourdi » jusqu'à son retour à la température ambiante étant de 30 minutes à 5 heures au maximum.

2. Procédé selon la revendication 1, caractérisé en ce que les pièces sont en forme de tubes et déplacées régulièrement dans le sens longitudinal par rapport au gradient thermique de manière à ne porter à chaque instant, qu'un court tronçon de matériau à la température de cuisson, d'une extrémité à l'autre de la pièce.

3. Procédé selon la revendication 1, caractérisé en ce que les pièces sont en forme de tubes et déplacées régulièrement dans le sens transversal par rapport au gradient thermique, chaque pièce étant en totalité portée à une température croissante puis décroissante.

4. Procédé selon l'une quelconque des revendications 1 à 3, caractérisé en ce que le four est soumis, durant le défilement des pièces, à une circulation d'hydrogène pur.

5. Procédé selon l'une quelconque des revendications 1 à 4, caractérisé en ce que le four est soumis, durant le défilement des pièces, à une circulation d'hydrogène additionné de faibles quantités d'oxygène et/ou d'oxyde de carbone, et/ou d'azote, et/ou de vapeur d'eau.

6. Procédé selon l'une quelconque des revendications 1 à 5, caractérisé en ce que l'oxyde de magnésium et/ou de terre rare additionné à la poudre d'alumine pure est en proportion comprise entre 0,01 % et 0,1 % en poids.

## Claims

1. Process for the production of sintered alumina bodies having an optical transparency of at least 90 % and high mechanical strength, of the type comprising forming the bodies from a mixture of high-purity alumina powder, an organic binder, and a small percentage of oxide, especially of magnesium and/or rare earth(s), shaping the bodies and then submitting them to two successive heat-treatments, viz. a first treatment in an oxidizing atmosphere to remove the binder and consolidate the particles, and a second treatment at a higher temperature and in a hydrogen-rich atmosphere to bring about sintering, characterized in that said second heat treatment is carried out by continuously moving said bodies through a furnace maintained at a temperature between 1 820 and 1 970 °C at a constant speed of translation between 3 and 50 mm per minute, the total time necessary for baking a body from the consolidated or « dégourdi » state until its return to ambient température being of the order of 30 minutes to a maximum of 5 hours.

2. Process according to Claim 1, characterized in that the bodies are in the form of tubes and are regularly moved longitudinally with respect to the thermal gradient in such a manner that, at any instant, only a short piece of material, is brought, over its entire length, to furnace temperature.

3. Process according to Claim 1, characterized in that the bodies are in the form of tubes and are regularly moved transversely with respect to the thermal gradient, each body being totally exposed to an initially increasing and subsequently decreasing temperature.

4. Process according to any one of Claims 1 to 3, characterized in that pure hydrogen is circulated through the furnace during movement of the bodies therethrough.

5. Process according to any one of Claims 1 to 4, characterized in that hydrogen mixed with small amounts of oxygen and/or carbon monoxide, and/or nitrogen, and/or water vapour, is circulated through the furnace during movement of the bodies therethrough.

6. Process according to any one of Claims 1 to 5, characterized in that the oxide of magnesium and/or rare earth(s) is mixed with the pure alumina in a proportion between 0.01 % and 0.1 % by weight.

## Ansprüche

1. Verfahren zum Herstellen von Werkstücken aus gesintertem Aluminiumoxid mit einer optischen Durchlässigkeit von wenigstens 90 % und einer hohen mechanischen Festigkeit, bei welchem die Werkstücke aus einem Aluminiumoxidpulver von hoher Reinheit mit einem Zusatz eines organischen Bindemittels und einem geringen Anteil eines Oxids insbesondere des Magnesiums und/oder einer seltenen Erde geformt und anschließend zwei aufeinanderfolgenden Wärmebehandlungen unterworfen werden, nämlich einer ersten Behandlung in einer oxidierenden Atmosphäre zum Eliminieren des Bindemittels und zum Verfestigen der Teilchen und einer zweiten Behandlung bei erhöhter Temperatur in einer wasserstoffreichen Atmosphäre zum Herbeiführen des Sinterns, dadurch gekennzeichnet, daß die zweite Wärmebehandlung stattfindet, indem man die Werkstücke in einer kontinuierlichen Vorschubbewegung durch einen Ofen bewegt, welcher auf einer Temperatur zwischen 1 820 °C und 1 970 °C gehalten wird, daß die Vorschubgeschwindigkeit konstant ist und zwischen 3 und 50 mm pro Minute liegt und daß die notwendige Gesamtzeit für das Brennen eines Werkstücks, ausgehend von seinem verfestigten oder « vorgebrannten » Zustand bis zur Rückkehr zur Umgebungstemperatur in der Größenordung zwischen 30 Minuten und maximal 5 Stunden liegt.

2. Verfahren nach Anspruch 1, dadurch gekennzeichnet, daß die Werkstücke in Form von Rohren vorliegen und in bezug auf den thermischen Gradienten gleichmäßig in Längsrichtung vorgeschoben werden, so daß in jedem Augenblick jeweils nur ein kurzer Abschnitt des Materials, fortschreitend von einem Ende des Werkstücks zum anderen, auf die Brenntemperatur gebracht wird.

3. Verfahren nach Anspruch 1, dadurch gekennzeichnet, daß die Werkstücke in Form von Rohren vorliegen und in bezug auf den thermischen Gradienten gleichmäßig in Querrichtung vorgeschoben werden, so daß jedes Werkstück in seiner Gesamtheit auf eine ansteigende und danach abfallende Temperatur gebracht wird.

4. Verfahren nach einem der Ansprüche 1 bis 3, dadurch gekennzeichnet, daß während des Durchlaufs der Werkstücke eine Zirkulation reinen Wasserstoffs im Ofen aufrechterhalten wird.

5. Verfahren nach einem der Ansprüche 1 bis 4, dadurch gekennzeichnet, daß während des Durchlaufs der Werkstücke eine Zirkulation von Wasserstoff, versetzt mit kleinen Mengen von Sauerstoff und/oder Kohlenoxid und/oder Stickstoff und/oder Wasserdampf im Ofen aufrechterhalten wird.

6. Verfahren nach einem der Ansprüche 1 bis 5, dadurch gekennzeichnet, daß das Magnesiumoxid und/oder das Oxid einer seltenen Erde dem reinen Aluminiumoxidpulver in einem Anteil zwischen 0,01 Gew.% und 0,1 Gew.% zugesetzt wird.